# EUROPÄISCHE PATENTSCHRIFT

(11) **EP 0 590 507 B1**
(45) Veröffentlichungstag und Bekanntmachung des Hinweises auf die Patenterteilung: **04.12.1996**
(21) Anmeldenummer: 93115306.8
(22) Anmeldetag: 23.09.1993
(51) Int. Cl.: B29C 47/64, B29K 23/00

(54) **Verfahren und Vorrichtung zur Herstellung von Extrudaten aus ultrahochmolekularem Polyethylen**
Method and device for producing extrusions from ultra-high molecular polyethylene
Procédé et dispositif pour la fabrication de produits d'extrusion en polyéthylène hypermoléculaire

(30) Priorität: 01.10.1992 DE 4232988
(43) Veröffentlichungstag der Anmeldung: 06.04.1994
(73) Patentinhaber: HOECHST AKTIENGESELLSCHAFT, 65926 Frankfurt am Main (DE)
(72) Erfinder: Gusik, Meinhard, D-46147 Oberhausen (DE); Kellersohn, Rudolf, Dipl.-Ing., D-46499 Hamminkeln (DE)

(56) Entgegenhaltungen:
- DE-A- 1 729 373
- DE-A- 2 311 946
- DE-A- 3 630 208
- FR-A- 2 669 260

## Beschreibung

Die vorliegende Erfindung betrifft ein Verfahren zur Herstellung von Extrudaten aus ultrahochmolekularem Polyethylen (PE-UHMW) auf Schneckenextudern und eine Vorrichtung zur Durchführung dieses Verfahrens.

Unter den Polyethylenen nehmen die PE-UHMW-Typen eine Sonderstellung ein. Man versteht hierunter nach dem Niederdruckverfahren erhaltene lineare Polyethylene mit einer viskosimetrisch gemessenen mittleren Molmasse von mindestens 1 x 10⁶ g/mol, insbesondere 2,5 x 10⁶ g/mol bis etwa 1 x 10⁷ g/mol. Ein Verfahren zur Bestimmung so hoher Molmassen ist z.B. in CZ-Chemische Technik 4 (1974), 129 ff beschrieben.

Ultrahochmolekulares Polyethylen zeichnet sich durch eine Reihe physikalischer Kenndaten aus, die ihm vielfältige Einsatzmöglichkeiten eröffnen. Hervorzuheben sind sein hoher Verschleißwiderstand, sein niedriger Reibungskoeffizient gegenüber anderen Werkstoffen und sein ausgezeichnetes Zähigkeitsverhalten. Überdies ist es bemerkenswert beständig gegenüber zahlreichen Chemikalien.

Aufgrund seines günstigen mechanischen, thermischen und chemischen Verhaltens hat PE-UHMW in den verschiedensten Anwendungsgebieten Eingang als vielseitiger Werkstoff gefunden. Als Beispiele seien genannt die Textilindustrie, der Maschinenbau, die chemische Industrie und der Bergbau.

Der Verwendungsmöglichkeiten des Werkstoffes sind dadurch Grenzen gesetzt, daß seine Verarbeitung auf Kolbenstrangpressen und den üblichen Ein- bzw. Mehrschneckenextrudern zu Formkörpern nicht immer zu befriedigenden Ergebnissen führt.

Um PE-UHMW möglichst schonend, d.h. ohne Beeinträchtigung seiner mechanischen Eigenschaften zu extrudieren, verwendet man vielfach Kolbenstrangpressen (Ramextruder). Trotz mancher Vorzüge genügt diese Verarbeitungsweise aber nicht allen Ansprüchen. Störend und nicht immer tolerierbar sind insbesondere die an den Formkörper auftretenden Hubmarkierungen.

Diese Nachteile weisen auf Schneckenextrudern hergestellte Hohlkörper und Profile aus PE-UHMW nicht auf. Jedoch wird das hochmolekulare Polymerisat schon bei mittleren Schneckendrehzahlen stark überhitzt. Infolge der hohen Viskosität der Schmelze, die auch bei Temperatursteigerung nur geringfügig vermindert wird, wird ein sehr großer Anteil der der Schnecke zugeführten mechanischen Energie über Reibung in Wärme umgewandelt. Die dadurch bewirkte Erhitzung des Materials kann so erheblich sein, daß sie zu einer thermischen Schädigung des Kunststoffes infolge Abbau oder Zersetzung, d.h. durch Spaltung der Molekülketten und damit zu einer Herabsetzung der mittleren Molmasse, führt. Während der Durchsatz, das ist die in der Zeiteinheit geförderte Extrudatmenge, etwa proportional der Schneckendrehgeschwindigkeit zunimmt, steigt die Temperatur überproportional an. Aus diesem Grunde kann PE-UHMW auf Schneckenextrudern üblicher Bauart nur bei geringer Schneckendrehzahl extrudiert werden. Damit wird das Verfahren aber unwirtschaftlich und für viele technische Einsatzgebiete ungeeignet.

Aus der EP-A-01 90 878 ist es bekannt, ultrahochmolekulares Polyethylen in einem Einschneckenextruder zu verarbeiten. beiten. Das verfahren besteht darin, pulverförmiges PE-UHMW in einem Einschneckenextruder, dessen Zylinderrohr im kühlbaren Einzugsbereich mit sich in Längrichtung erstreckenden Nuten versehen ist und ein heizbares Förderteil aufweist, aufzuschnelzen, und das aufgeschmolzene PE-UHMW über eine Düse mit einem Längen/Durchmesser-Verhältnis von mindestens 10 zu extrudieren. Die Extrudate werden mit einem Verstreckungsverhältnis von mindestens 1, vorzugsweise 8 bis 30 : 1 abgezogen. Diese Arbeitsweise eignet sich lediglich zur Herstellung gereckter Fäden mit kleinem Durchmesser und bei sehr kleinen Ausstoßleistungen.

Aus der FR-A-2 669 260 ist es bekannt, PE-UHMW in einem Einschneckenextruder zu verarbeiten, dessen Schneckenwelle in eine Einzugszone, eine Umwandlungszone und eine Ausstoßzone gegliedert ist, wobei die Einzugszone ein Längen/Durchmesser - Verhältnis von 12 bis 16 aufweist, die Umwandlungszone einen Mischbereich mit einem Längen/Durchmesser - Verhältnis von 2 bis 4 umfaßt, und die Ausstoßzone aus einem Mischbereich mit einem Längen/Durchmesser - Verhältnis von 6 bis 8 besteht.

Es bestand die Aufgabe, solche Bedingungen für die Extrusion von PE-UHMW aufzufinden und aufeinander abzustimmen, daß die geschilderten Nachteile vermieden werden. Diese Aufgabe wird durch die vorliegende Erfindung gelöst. Sie besteht in einem Verfahren zur Herstellung von Extrudaten aus pulverförmigem oder kleinteiligem ultrahochmolekularem Polyethylen mit einer viskosimetrisch gemessenen mittleren Molmasse von mindestens 1 x 10⁶ g/mol in einem Einschneckenextruder, dessen Schneckenwelle in eine Einzugszone, eine Umwandlungszone und eine Ausstoßzone gegliedert ist, wobei die Einzugszone ein zweigängiger Schneckenabschnitt ist und aus einem Förderbereich, dessen Länge das 4- bis 16-fache und einem Dekompressionsbereich, dessen Länge das 5- bis 18-fache des Schneckendurchmessers beträgt, gebildet wird, die Umwandlungszone einen Scherbereich umfaßt, dessen Länge das 1- bis 2,5-fache des Schneckendurchmessers ist und die Ausstoßzone einen Mischbereich umfaßt, dessen Länge sich auf das 1-bis 4-fache des Schneckendurchmessers beläuft.

Das neue Verfahren stellt nicht nur sicher, daß das Polymerisat schonend, d.h. ohne thermischen Abbau verarbeitet wird, man erhält darüber hinaus Profile mit einwandfreien Oberflächen, die frei von Lunkern und Poren sind und keine inneren Spannungen aufweisen. Die gewählte Schneckengeometrie gewährleistet außerdem, daß das Polymerisat über dem gesamten, dem Extruder zur Verfügung stehenden Drehzahlbereich störungsfrei gefördert und kontinuierlich dem formgebenden Werkzeug zugeführt wird. Es erlaubt einen hohen Materialdurchsatz und ist dementsprechend sehr wirtschaftlich.

Erfindungsgemäß wird das PE-UHMW pulverförmig oder kleinteilig eingesetzt. Hierunter versteht man die im Polymerisationsprozeß erhaltenen Partikel, jedoch auch durch mechanische Behandlung oder in anderer Weise zerkleinerte oder auch vergröberte Teilchen des unmittelbaren Polymerisationsproduktes.

Die Förderung des PE-UHMW durch den Extruder hindurch erfolgt bei Temperaturen von 140 bis 300°C, vorzugsweise 160 bis 180°C. Die erforderliche Wärme wird dem Material auf zwei Wegen zugeführt, intern durch seine mechanische Beanspruchung als Reibungswärme und extern über Heizvorrichtungen.

Entsprechend der Erfindung ist die Einzugszone als zweigängiger Schneckenteil ausgebildet und in zwei Bereiche unterteilt. Im ersten wird der Thermoplast aufgenommen, gefördert und verdichtet. Seine Länge beträgt das 4- bis 16-fache und vorzugsweise das 4- bis 8-fache des Schneckendurchmessers. Ihm folgt ein zweiter Bereich, in dem sich durch Veränderung der Gangtiefe der Stege eine Dekompression einstellt. Dieser Bereich hat eine Länge des 5- bis 18-fachen, vorzugsweise des 6- bis 12-fachen des Schneckendurchmessers. Die Breite der Stege ist über die gesamte Einzugszone konstant und mißt das 0,05- bis 0,09-, vorzugsweise das 0,055- bis 0,065-fache des Schneckendurchmessers. Das Verhältnis der Gangtiefe in der Einzugszone zur Gangtiefe in der Ausstoßzone ist 0,6 : 1 bis 1 : 1, vorzugsweise 0,68 : 1 bis 0,76 : 1, wobei die maximale Gangtiefe über die gesamte Länge der Schnecke 2,5 bis 6, vorzugsweise 3,5 bis 5 mm beträgt.

Aus der Einzugszone gelangt das durch die Reibungskräfte bereits über das Kristallitschmelzinterval erhitzte PE-UHMW in die Umwandlungszone. Sie besteht aus einem durch ein Scherelement konventioneller Bauart gebildeten Scherbereich. Vorzugsweise ist das Scherelement mit Längsnuten versehen. In ihm durchströmt der Massestrom einen definierten Scherspalt, wodurch die Plastifizierung und die Homogenisierung des Thermoplasten vervollständigt wird. Die Länge des Scherbereiches beträgt das 1- bis 2,5-fache, vorzugsweise das 1,5- bis 2-fache des Schneckendurchmessers. Die Spaltbreite, das ist der Abstand des Scherelements zur Zylinderwand, ist 0,20 bis 0,50 mm, vorzugsweise 0,25 bis 0,35 mm.

Nach einer bewährten Ausführungsform des neuen Verfahrens kann sich dem Scherbereich der Einzugszone ein Förderbereich anschließen. Er ist als eingängiger Schneckenabschnitt ausgebildet und hat eine Länge bis zum 4,5-fachen, vorzugsweise dem 3- bis 4-fachen des Schneckendurchmessers. Die Stegbreite beträgt das 0,08- bis 0,15-fache, insbesondere das 0,10- bis 0,12-fache des Schneckendurchmessers.

Das aus der Umwandlungszone kommende Material wird von der Ausstoß- oder Meteringzone übernommen. Sie hat die Funktion eines Mischbereiches und ihre Länge entspricht dem 1- bis 4-fachen, insbesondere dem 2- bis 3-fachen des Schneckendurchmessers. Vorzugsweise wird der Mischbereich von einem mit Noppen oder Stiften versehenen Schneckenteil gebildet.

Es hat sich bewährt, auch dem Mischbereich in der Umwandlungszone einen eingängigen Schneckenteil als Förderbereich anzuschließen. Seine Länge beträgt bis zum 2-fachen des Schneckendurchmessers und die Stegbreite ist, wie im Förderbereich der Umwandlungszone, das 0,08- bis 0,15-fache, insbesondere das 0,10- bis 0,12-fache des Schneckendurchmessers. Nach Verlassen der Umwandlungszone, sei es unmittelbar über den Mischbereich oder über den Förderbereich, wird das thermoplastische Material dem Werkzeug zugeführt.

Gegenstand der Erfindung ist weiterhin eine Vorrichtung zur Durchführung des neuen Verfahrens. Sie besteht aus einem Zylinderrohr, in dessen Bohrung eine Schneckenwelle drehbar gelagert ist, das im kühlbaren Einzugsbereich mit sich in Längsrichtung erstreckenden Taschen bzw. Nuten versehen ist und das ein heizbares Förderteil aufweist und einem sich anschließenden Werkzeug, wobei die Schneckenwelle im Einzugsbereich zweigängig ist und aus einem Förderbereich mit einer Länge des 4- bis 16-fachen, vorzugsweise 4- bis 8-fachen des Schneckendurchmessers und einem Dekompressionsbereich, dessen Länge das 5- bis 18-fache, vorzugsweise das 6- bis 12-fache des Schneckendurchmessers beträgt, gebildet wird, daß sie in einer Umwandlungszone einen Scherbereich umfaßt, dessen Länge das 1- bis 2,5-fache, vorzugsweise das 1,5- bis 2-fache des Schneckendurchmessers ist und daß sie in einer Ausstoßzone einen Mischbereich umfaßt, dessen Länge sich auf das 1- bis 4-fache, vorzugsweise das 2- bis 3-fache des Schneckendurchmessers beläuft.

In bewährten Ausführungsformen der neuen Vorrichtung schließt sich in der Umwandlungszone dem Scherbereich und/oder in der Ausstoßzone dem Mischbereich jeweils ein Förderbereich in Form eines eingängigen Schneckenabschnitts an. Seine Länge beträgt in der Umwandlungszone bis zum 4,5-fachen, vorzugsweise das 3- bis 4-fache des Schneckendurchmessers und in der Ausstoßzone bis zum 2-fachen des Schneckendurchmessers.

Die Vorrichtung entsprechend der Erfindung ist im Einzugsbereich mit einer Anzahl gleichmäßig über den Umfang des Zylinders verteilte Axialnuten versehen, die im Bereich der Einfüllöffnung taschenförmig erweitert sein können. Die Länge der Nuten, die vorzugsweise rechteckigen Querschnitt aufweisen, beträgt das 3- bis 3,5-fache des Schneckendurchmessers. Sie haben eine Tiefe von 4,5 bis 6 mm, insbesondere 5 bis 5,5 mm und eine Breite von 5 bis 8,5 mm, insbesondere 6 bis 7 mm. Die Anzahl der Nuten ist abhängig vom Durchmesser der Schnecke. Sie beträgt z.B. bei einem Schneckendurchmesser von 150 mm 6 bis 12, vorzugsweise 8 bis 10.

Nach einer bewährten Ausführungsform der neuen Vorrichtung sind die Taschen um 15 bis 20 mm länger als der Durchmesser der Schnecke und ihre Tiefe beträgt 2 bis 4, vorzugsweise 3 bis 3,5 mm. Die Taschen gehen unter einem Winkel von 6 bis 9 und vorzugsweise 7 bis 8° in die Nuten über.

Um einen kontinuierlichen Strom des pulverförmigen oder kleinteiligen Materials sicherzustellen, soll die Einfüllöffnung eine Länge des 1,4- bis 1,8-fachen, vorzugsweise 1,5- bis 1,6-fachen des Schneckendurchmessers haben und ihre Breite soll etwa gleich dem Schneckendurchmesser sein oder ihn bis zu 4 mm übertreffen.

Das den Zylinder verlassende Material wird plastifiziert dem formgebenden Werkzeug zugeführt. Das Werkzeug ist mit Heiz- und Kühlvorrichtungen versehen, die es ermöglichen, die Wärme geregelt zu- und/oder abzuführen. Die Temperaturen entlang des Werkzeuges liegen zwischen 300°C am Eingang und 130°C am Ende, vorzugsweise zwischen 180 und 140°C. In Richtung des Werkzeugausgangs verjüngt sich der Querschnitt des Fließkanals. Dadurch entsteht in der Bügelzone ein Druckanstieg, der durch entsprechende Einstellung der Querschnittsgröße so bemessen wird, daß die Thermoplastpartikel zu einer homogenen Masse zusammensintern und die Formkörper eine glatte Oberfläche erhalten.

Das aus dem Werkzeug austretende Extrudat wird in eine Kühldüse geleitet, in der seine Oberfläche auf Temperaturen unterhalb des Kristallitschmelzpunktes, d.h. unterhalb etwa 130°C abgekühlt wird. Nach dem Verlassen der Kühldüse werden die Formkörper durch geeignete Vorrichtungen, z.B. Bremslippen oder Bremslaschen oder durch geeignete Maßnahmen so geführt, daß sich eine gegen die Extrusionsrichtung wirkende Kraft einstellt. Sie gewährleistet in der Kühlzone einen allseitigen Kontakt des Formkörpers mit dem durch eine Wand von ihm getrennten Kühlmittel, so daß der Wärmeentzug gleichmäßig erfolgt und das Auftreten von Spannungen im Formkörper vermieden wird. Die weitere Abkühlung erfolgt, entsprechend dem Stand der Technik, in einem gleichmäßig temperierten oder in unterschiedliche Temperaturzonen unterteilten Wasserbad.

In einer besonderen Ausführungsform der Vorrichtung zur Durchführung des Verfahrens wird das Extrudat über eine Lochscheibe zu Strängen geformt. Die Dicke der Lochscheibe beträgt üblicherweise 10 bis 50 mm, bevorzugt 30 bis 40 mm und die Bohrungen haben Durchmesser von 1,5 bis 5 mm, insbesondere 2 bis 4 mm Durchmesser. Zweckmäßig sind sie mit konischen Einläufen ausgestattet, wobei der Einlaufwinkel 0,5 bis 5°, vorzugsweise 0,8 bis 1,5° beträgt. Die aus der Lochscheibe austretenden Stränge werden mit handelsüblichen Granuliervorrichtungen, wie Stranggranulatoren, Heizabschlaggranulatoren, Wasserring- bzw. Unterwassergranulatoren granuliert.

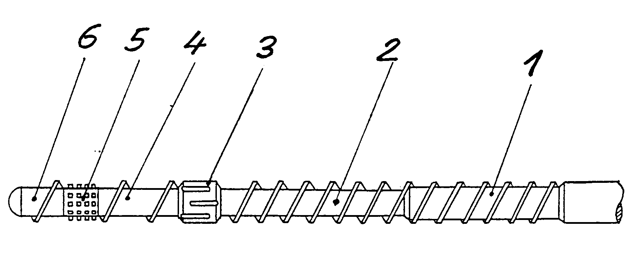

In der beigefügten Zeichnung ist eine zur Durchführung des neuen Verfahrens geeignete Schneckenwelle dargestellt. Die Schneckenwelle ist in eine Einzugzone, eine Umwandlungszone und eine Austoßzone gegliedert. Die Einzugszone wird aus einem Förderbereich 1 und einem Dekompressionsbereich 2 gebildet. Die Umwandlungszone besteht aus einem Scherbereich 3 dem sich ein Förderbereich 4 anschließen kann. Das aus der Umwandlungszone kommende Material wird von der Ausstoß-(Metering-)zone übernommen. Sie umfaßt einen Mischbereich 5, dem sich ebenfalls ein Förderbereich 6 anschließen kann.

## Patentansprüche

1. Verfahren zur Herstellung von Extrudaten aus pulverförmigem bis kleinteiligem ultrahochmolekularem Polyethylen mit einer viskosimetrisch gemessenen mittleren Molmasse von mindestens 1 x 10⁶ g/mol in einem Einschneckenextruder, dessen Schneckenwelle in eine Einzugszone, eine Umwandlungszone und eine Ausstoßzone gegliedert ist, wobei die Einzugszone ein zweigängiger Schneckenabschnitt ist und aus einem Förderbereich (1), dessen Länge das 4- bis 16-fache und einem Dekompressionsbereich (2), dessen Länge das 5- bis 18-fache des Schneckendurchmessers beträgt, gebildet wird, die Umwandlungszone einen Scherbereich (3) umfaßt, dessen Länge das 1- bis 2,5-fache des Schneckendurchmessers ist und die Ausstoßzone einen Mischbereich (5) umfaßt, dessen Länge sich auf das 1- bis 4-fache des Schneckendurchmessers beläuft.

2. Verfahren nach Anspruch 1, dadurch gekennzeichnet, daß in der Einzugszone die Länge des Förderbereichs (1) das 4- bis 8-fache und die Länge des Dekompressionsbereichs (2) das 6- bis 12-fache des Schneckendurchmessers beträgt, in der Umwandlungszone die Länge des Scherbereichs (3) das 1,5- bis 2-fache des Schneckendurchmessers ist und in der Ausstoßzone die Länge des Mischbereichs (5) sich auf das 2- bis 3-fache der Länge des Schneckendurchmessers beläuft.

3. Verfahren nach Anspruch 1 oder 2, dadurch gekennzeichnet, daß sich in der Umwandlungszone dem Scherbereich (3) ein als eingängiger Schneckenabschnitt ausgebildeter Förderbereich (4) anschließt, dessen Länge bis zum 4,5-fachen, vorzugsweise das 3- bis 4-fache des Schneckendurchmessers beträgt.

4. Verfahren nach einem oder mehreren der Ansprüche 1 bis 3, dadurch gekennzeichnet, daß sich in der Ausstoßzone dem Mischbereich (5) ein als eingängiger Schneckenabschnitt ausgebildeter Förderbereich (6) anschließt, dessen Länge bis zum 2-fachen des Schneckendurchmessers beträgt.

5. Verfahren nach einem oder mehreren der Ansprüche 1 bis 4, dadurch gekennzeichnet, daß das Verhältnis der Gangtiefe der Schnecke in der Einzugszone zur Gangtiefe in der Ausstoßzone 0,6 : 1 bis 1 : 1, vorzugsweise 0,68 : 1 bis 0,76 : 1 ist.

6. Verfahren nach einem oder mehreren der Ansprüche 1 bis 5, dadurch gekennzeichnet, daß die maximale Gangtiefe über die gesamte Länge der Schnecke 2,5 bis 6 mm, vorzugsweise 3,5 bis 5 mm beträgt.

7. Verfahren nach einem oder mehreren der Ansprüche 1 bis 6, dadurch gekennzeichnet, daß die Spaltbreite im Scherbereich der Schnecke 0,20 bis 0,50 mm, vorzugsweise 0,25 bis 0,35 mm ist.

8. Vorrichtung zur Durchführung des Verfahrens nach den Ansprüchen 1 bis 7, bestehend aus einem Zylinderrohr, in dessen Bohrung eine Schneckenwelle drehbar gelagert ist, das im kühlbaren Einzugsbereich mit sich in Längsrichtung erstreckenden Taschen bzw. Nuten versehen ist und das ein heizbares Förderteil aufweist und einem sich anschließenden Werkzeug, wobei die Schneckenwelle im Einzugsbereich zweigängig ist und aus einem Förderbereich (1) einer Länge des 4- bis 16-fachen, vorzugsweise 4- bis 8-fachen des Schneckendurchmessers und einem Dekompressionsbereich (2), dessen Länge das 5- bis 18-fache, vorzugsweise das 6- bis 12-fache des Schneckendurchmessers beträgt, gebildet wird, daß sie in einer Umwandlungszone einen Scherbereich umfaßt, dessen Länge das 1- bis 2,5-fache, vorzugsweise das 1,5- bis 2-fache des Schneckendurchmessers ist und daß sie in einer Ausstoßzone einen Mischbereich (5) umfaßt, dessen Länge sich auf das 1- bis 4-fache, vorzugsweise das 2- bis 3-fache des Schneckendurchmessers beläuft.

9. Vorrichtung nach Anspruch 8, dadurch gekennzeichnet, daß sich in der Umwandlungszone dem Scherbereich (3) ein Förderbereich (4) in Form eines eingängigen Schneckenabschnitts anschließet, dessen Länge bis zum 4,5-fachen, vorzugsweise das 3- bis 4-fache des Schneckendurchmessers beträgt.

10. Vorrichtung nach den Ansprüchen 8 oder 9, dadurch gekennzeichnet, daß sich in der Ausstoßzone dem Mischbereich (5) ein Förderbereich (6) in Form eines eingängigen Schneckenabschnitts anschließt, dessen Länge bis zum 2-fachen des Schneckendurchmessers beträgt.

11. Vorrichtung nach einem oder mehreren der Ansprüche 8 bis 10, dadurch gekennzeichnet, daß die Nuten im Einzugsbereich rechteckigen Querschnitt aufweisen, ihre Länge das 3- bis 3,5-fache des Schneckendurchmessers, ihre Tiefe 4,5 bis 6 mm, insbesondere 5 bis 5,5 mm und ihre Breite 5 bis 8,5 mm, insbesondere 6 bis 7 mm, betragen.

12. Vorrichtung nach einem oder mehreren der Ansprüche 8 bis 11, dadurch gekennzeichnet, daß die Taschen um 15 bis 20 mm länger sind, als der Durchmesser der Schnecke und ihre Tiefe 2 bis 4 mm, vorzugsweise 3 bis 3,5 mm, beträgt.

13. Vorrichtung nach einem oder mehreren der Ansprüche 8 bis 12, dadurch gekennzeichnet, daß das Werkzeug als Lochscheibe mit einer Dicke von 10 bis 50 mm, vorzugsweise 30 bis 40 mm, ausgebildet und mit Bohrungen von 1,5 bis 5 mm, vorzugsweise 2 bis 4 mm Durchmesser versehen ist.

## Claims

1. A process for producing extrudates from pulverulent to small-particulate ultra-high molecular weight polyethylene having an average molecular weight, measured by viscometry, of at least 1 x 10⁶ g/mol in a single-screw extruder the screw shaft of which is arranged into a feed zone, a transition zone and a discharge zone, wherein the feed zone is a two-flight screw section and is formed from a transport region (1) the length of which is 4 to 16 times the screw diameter and a decompression region (2) the length of which is 5 to 18 times the screw diameter, the transition zone contains a shearing region (3) the length of which is 1 to 2.5 times the screw diameter and the discharge zone comprises a mixing region (5) the length of which is 1 to 4 times the screw diameter.

2. The process as claimed in claim 1, wherein, in the feed zone, the length of the transport region (1) is 4 to 8 times the screw diameter and the length of the decompression region (2) is 6 to 12 times the screw diameter, in the transition zone, the length of the shearing region (3) is 1.5 to 2 times the screw diameter and, in the discharge zone, the length of the mixing region (5) is 2 to 3 times the length of the screw diameter.

3. The process as claimed in claim 1 or 2, wherein, in the transition zone, the shearing region (3) is followed by a transport region (4) which is designed as a single-flight screw section and the length of which is up to 4.5 times, preferably 3 to 4 times, the screw diameter.

4. The process as claimed in one or more of claims 1 to 3, wherein, in the discharge zone, the mixing region (5) is followed by a transport region (6) which is designed as a single-flight screw section and the length of which is up to 2 times the screw diameter.

5. The process as claimed in one or more of claims 1 to 4, wherein the ratio of the flight depth of the screw in the feed zone to the flight depth in the discharge zone is 0.6 : 1 to 1 : 1, preferably 0.68 : 1 to 0.76 : 1.

6. The process as claimed in one or more of claims 1 to 5, wherein the maximum flight depth over the entire length of the screw is 2.5 to 6 mm, preferably 3.5 to 5 mm.

7. The process as claimed in one or more of claims 1 to 6, wherein the screw clearance in the shearing region of the screw is 0.20 to 0.50 mm, preferably 0.25 to 0.35 mm.

8. A device for carrying out the process as claimed in any of claims 1 to 7, comprising of a barrel tube in the bore of which a screw shaft is rotatably mounted and which is provided, in the coolable feed region, with pockets or grooves extending in the longitudinal direction and which has a heatable transport part and an adjoining die, wherein the screw shaft has two flights in the feed region and is formed by a transport region (1) with a length which is 4 to 16 times, preferably 4 to 8 times, the screw diameter and by a decompression region (2) with a length which is 5 to 18 times, preferably 6 to 12 times, the screw diameter, wherein, in a transition zone, said screw shaft contains a shearing region the length of which is 1 to 2.5 times, preferably 1.5 to 2 times, the screw diameter and wherein, in a discharge zone, said screw shaft comprises a mixing region (5) the length of which is 1 to 4 times, preferably 2 to 3 times, the screw diameter.

9. The device as claimed in claim 8, wherein, in the transition zone, the shearing region (3) is followed by a transport region (4) in the form of a single-flight screw section the length of which is up to 4.5 times, preferably 3 to 4 times, the screw diameter.

10. The device as claimed in claim 8 or 9, wherein, in the discharge zone, the mixing region (5) is followed by a transport region (6) in the form of a single-flight screw section the length of which is up to 2 times the screw diameter.

11. The device as claimed in one or more of claims 8 to 10, wherein the grooves in the feed region are rectangular in cross section, their length is 3 to 3.5 times the screw diameter, their depth is 4.5 to 6 mm, in particular 5 to 5.5 mm, and their width is 5 to 8.5 mm, in particular 6 to 7 mm.

12. The device as claimed in one or more of claims 8 to 11, wherein the pockets are 15 to 20 mm longer than the diameter of the screw and their depth is 2 to 4 mm, preferably 3 to 3.5 mm.

13. The device as claimed in ore or more of claims 8 to 12, wherein the die is designed as an apertured plate with a thickness of 10 to 50 mm, preferably 30 to 40 mm, and is provided with bores of 1.5 to 5 mm, preferably 2 to 4 mm, in diameter.

## Revendications

1. Procédé de fabrication de produits d'extrusion de polyéthylène hypermoléculaire d'une granulométrie allant de poudre à petits morceaux, d'une masse moléculaire moyenne, mesurée par voie viscosimétrique, d'au moins 1 x 10⁶ g/mol, dans une extrudeuse à vis dont la vis se divise en une zone d'entrée, une zone de transformation et une zone d'éjection, la zone d'entrée étant une portion de vis à double pas et étant formée d'une section de transport (1) dont la longueur vaut 4 à 16 fois le diamètre de la vis et d'une section de décompression (2) dont la longueur vaut 5 à 18 fois le diamètre de la vis, la zone de transformation comportant une section de cisaillement dont la longueur vaut de 1 à 2,5 fois le diamètre de la vis et la zone d'éjection comportant une section de mélange (5) dont la longueur se monte à 1 à 4 fois le diamètre de la vis.

2. Procédé selon la revendication 1, caractérisé par le fait que dans la zone d'entrée, la longueur de la section de transport (1) vaut 4 à 8 fois le diamètre de la vis et la longueur de la zone de décompression (2) vaut de 6 à 12 fois le diamètre de la vis, que dans la zone de transformation, la longueur de la section de cisaillement (3) vaut de 1,5 à 2 fois le diamètre de la vis et que dans la zone d'éjection, la longueur de la section de mélange (5) se monte à 2 à 3 fois la longueur du diamètre de la vis.

3. Procédé selon la revendication 1 ou 2, caractérisé par le fait que, dans la zone de transformation, à la section de cisaillement (3) se raccorde une section de transport qui est conçue sous forme d'une portion de vis à simple pas et dont la longueur vaut jusqu'à 4,5 fois, de préférence de 3 à 4 fois, le diamètre de la vis.

4. Procédé selon l'une ou plusieurs des revendications 1 à 3, caractérisé par le fait que, dans la zone d'éjection, à la section de mélange (5) se raccorde une section de transport (6) qui est conçue sous forme d'une portion de vis à simple pas et dont la longueur vaut jusqu'à 2 fois le diamètre de la vis.

5. Procédé selon l'une ou plusieurs des revendications 1 à 4, caractérisé par le fait que le rapport de la hauteur du filet de la vis dans la zone d'entrée à la hauteur du filet de la vis dans la zone d'éjection vaut 0,6 : 1 à 1 : 1, de préférence 0,68 : 1 à 0,76 : 1.

6. Procédé selon l'une ou plusieurs des revendications 1 à 5, caractérisé par le fait que la hauteur maximale du filet sur toute la longueur de la vis vaut 2,5 à 6 mm, de préférence 3,5 à 5 mm.

7. Procédé selon l'une ou plusieurs des revendications 1 à 6, caractérisé par le fait que la largeur de fente dans la section de cisaillement de la vis vaut 0,20 à 0,50 mm de préférence 0,25 à 0,35 mm.

8. Dispositif pour la mise en oeuvre du procédé selon la revendication 1 à 7, constitué d'un tube cylindrique dans l'alésage duquel une vis est portée avec liberté de rotation, qui présente, dans la zone d'entrée, refroidissante, des poches, ou rainures, qui s'étendent selon la direction longitudinale, et qui présente une portion de transport chauffante, ainsi que d'un outil qui s'y raccorde, la vis étant à double pas dans la zone d'entrée et étant formée d'une section de transport (1) d'une longueur de 4 à 16 fois, de préférence de 4 à 8 fois le diamètre de la vis et d'une section de décompression (2) dont la longueur vaut 5 à 18 fois, de préférence 6 à 12 fois le diamètre de la vis, la vis comportant dans une zone de transformation une section de cisaillement dont la longueur vaut de 1 à 2,5 fois, de préférence de 1,5 à 2 fois le diamètre de la vis et la vis comportant, dans une zone d'éjection, une section de mélange (5) dont la longueur se monte à 1 à 4 fois, de préférence de 2 à 3 fois le diamètre de la vis.

9. Dispositif selon la revendication 8, caractérisé par le fait que, dans la zone de transformation, à la section de cisaillement (3) se raccorde, sous forme d'une portion de vis à simple pas, une section de transport (4) dont la longueur vaut jusqu'à 4,5 fois, de préférence de 3 à 4 fois, le diamètre de la vis.

10. Dispositif selon la revendication 8 ou 9, caractérisé par le fait que, dans la zone d'éjection, à la section de mélange (5) se raccorde, sous forme d'une portion de vis à simple pas, une section de transport (6) dont la longueur vaut jusqu'à deux fois le diamètre de la vis.

11. Dispositif selon l'une ou plusieurs des revendications 8 à 10, caractérisé par le fait que les rainures, dans la zone d'entrée, présentent une section rectangulaire, que leur longueur vaut de 3 à 3,5 fois le diamètre de la vis, que leur profondeur vaut de 4,5 à 6 mm, en particulier de 5 à 5,5 mm et que leur largeur vaut de 5 à 8,5 mm, en particulier de 6 à 7 mm.

12. Dispositif selon l'une ou plusieurs des revendications 8 à 11, caractérisé par le fait que les poches sont plus longues, de 15 à 20 mm, que le diamètre de la vis et que leur profondeur vaut de 2 à 4 mm, de préférence de 3 à 3,5 mm.

13. Dispositif selon l'une ou plusieurs des revendications 8 à 12, caractérisé par le fait que l'outil est conçu sous forme d'un disque perforé d'une épaisseur de 10 à 50 mm, de préférence 30 à 40 mm et qu'il présente des perçages d'un diamètre de 1,5 à 5 mm, de préférence de 2 à 4 mm.
